# EUROPEAN PATENT APPLICATION

(11) **EP 4 685 878 A1**
(43) Date of publication of application: **28.01.2026**
(21) Application number: 24830809.0
(22) Date of filing: 26.06.2024
(51) Int. Cl.: H01M 4/505, H01M 4/525, H01M 4/131, H01M 10/0525

(54) **PREPARATION METHOD FOR BATTERY POSITIVE ELECTRODE MATERIAL, BATTERY POSITIVE ELECTRODE, AND ALL-SOLID-STATE BATTERY**

(30) Priority: 26.06.2023 CN 202310758999
(71) Applicant: ZHEJIANG INTELLIGENT TRANSPORTATION TECHNOLOGY INNOVATION CENTER, Ningbo, Zhejiang 315336 (CN); Zhejiang Geely Holding Group Co., Ltd., Hangzhou, Zhejiang 310051 (CN)
(72) Inventor: CUI, Zhonghui, Ningbo, Zhejiang 315336 (CN)
(74) Representative: Michalski Hüttermann & Partner Patentanwälte mbB
(86) International application number: PCT/CN2024/101563
(87) International publication number: WO 2025/002170

(57) **Abstract**

The present application discloses a manufacturing method for a battery positive electrode material, a battery positive electrode, and an all-solid-state battery. The manufacturing method for a battery positive electrode material includes: forming a solution by dissolving a sulfide solid-state electrolyte in an organic solvent; dispersing a positive electrode active material into the solution, then carrying out drying treatment, to obtain a battery positive electrode material in which the positive electrode active material is coated with the sulfide solid-state electrolyte. The manufacturing method of the present application can increase the contact area between the solid-state electrolyte and the positive electrode active material, effectively solves the problem of small interfacial contact area between conventional solid-state electrolyte and positive electrode active material. Thus, the capability of ions to rapidly intercalate into or deintercalate out of positive electrode active material is enhanced, and the transport of ions and utilization of capacity are facilitated.

## Description

### CROSS-REFERENCE TO RELATED APPLICATIONS

This patent application claims priority to Chinese Patent Application No. 202310758999.5 with the title "MANUFACTURING METHOD FOR BATTERY POSITIVE ELECTRODE MATERIAL, BATTERY POSITIVE ELECTRODE, AND ALL-SOLID-STATE BATTERY", filed on June 26, 2023, the entire content of which is incorporated herein by reference.

### TECHNICAL FIELD

The present application relates to the field of secondary battery technologies, and in particular, to a manufacturing method for a battery positive electrode material, a battery positive electrode, and an all-solid-state battery.

### BACKGROUND

Electrolyte is an indispensable component of an all-solid-state battery, which not only plays a role in conducting ions between positive and negative electrodes, but also has a key influence on aspects such as specific energy, safety, cycle performance, rate performance and manufacturing cost of the battery.

At present, electrolyte in conventional all-solid-state batteries, for example, lithium-ion batteries, is liquid electrolyte. Because the liquid electrolyte is organic matter with a lower flash point, the electrolyte will be ignited under a condition of large current discharge or overcharge, causing the lithium-ion batteries to catch fire and explode, and the organic liquid is easy to leak, resulting in poor cycle performance and safety performance. In addition, at present, an energy density of a liquid lithium-ion battery using a high-nickel positive electrode and silicon-based negative electrode system is about 350 wh/kg, which may have approached the limit of energy density of the liquid lithium-ion battery. Therefore, it is urgent to develop a lithium-ion battery with high safety performance and high energy density.

### SUMMARY

The present application provides a manufacturing method of a battery positive electrode material, a battery positive electrode, and an all-solid-state battery.

**In** one aspect, the present application provides a manufacturing method of a battery positive electrode material, including: forming a solution by dissolving a sulfide solid-state electrolyte in an organic solvent; dispersing a positive electrode active material into the solution; and by drying the solution, obtaining a battery positive electrode material in which the positive electrode active material is coated with the sulfide solid-state electrolyte.

**In** an embodiment, the organic solvent includes at least one of ethanol, acetonitrile, N-methylformamide, or tetrahydrofuran. Preferably, the organic solvent includes ethanol.

**In** an embodiment, before forming the solution by dissolving the sulfide solid-state electrolyte in the organic solvent, the method further includes: obtaining an anhydrous organic solvent by adding a drying agent to the organic solvent and then standing.

**In** an embodiment, the drying agent includes a molecular sieve.

In an embodiment, a moisture content of the anhydrous organic solvent is less than 50 ppm.

In an embodiment, an amount ratio of the sulfide solid-state electrolyte, the organic solvent, and the positive electrode active material is 0.002~0.03 g: 5~10 mL: 1 g.

**Preferably,** the amount ratio of the sulfide solid-state electrolyte, the organic solvent, and the positive electrode active material is 0.002~0.01 g: 5~10 mL: 1 g.

In an embodiment, a thickness of a coating layer formed by coating the positive electrode active material with the sulfide solid-state electrolyte is 1~10 nm.

**In** an embodiment, the sulfide solid-state electrolyte includes at least one of Li₇₋ₐPS₆₋ₐXₐ, Thio-LISICONs, or Li₁₁₋ₓM₂₋ₓP₁₊ₓS₁₂, where X is selected from at least one of chlorine, bromine, or iodine; 0.5≤a≤2; M is selected from at least one of Ge, Sn, or Si.

In an embodiment, before dispersing the positive electrode active material into the solution, the method further includes: carrying out vacuum drying on the positive electrode active material, where a treatment temperature of the vacuum drying is 80~120 °C, and a treatment time of the vacuum drying is 5~10 h.

Preferably, the treatment time of the vacuum drying is 8~10 h.

In an embodiment, a vacuum degree of the vacuum drying is -0.085~-0.1 MPa.

In an embodiment, the positive electrode active material is dispersed into the solution and then the solution is continuously stirred, to make the positive electrode active material uniformly dispersed.

**In** an embodiment, an average particle size of the sulfide solid-state electrolyte is 100 nm≤ D50≤30 µm; an average particle size of the positive electrode active material is 10 nm≤ D50≤20 µm.

Preferably, the average particle size of the sulfide solid-state electrolyte is 1 µm≤ D50≤5 µm; the average particle size of the positive electrode active material is 1 µm≤ D50≤8 µm.

In an embodiment, the positive electrode active material is LiNiₓCo_{y}Mn_{(1-x-y)}O₂.

**In** an embodiment, a shape of the positive electrode active material includes a particle shape, a rod shape, and a sheet shape; preferably, a shape of the positive electrode material is a particle shape.

In an embodiment, the positive electrode active material is formed by coating LiNiₓCo_{y}Mn_{(1-x-y)}O₂ with a lithium-containing compound coating layer. The lithium-containing compound coating layer includes at least one of lithium niobate, lithium tantalate, lithium zirconate, lithium germanate, lithium phosphate, lithium iron phosphate, lithium aluminum titanium phosphate (LATP), lithium lanthanum zirconium oxide (LLZO), lithium silicate, lithium carbonate, lithium oxide, or lithium aluminum oxide.

Preferably, the lithium-containing compound coating layer includes at least one of lithium niobate or lithium phosphate.

In another aspect, the present application provides a battery positive electrode, including a battery positive electrode material manufactured by the manufacturing method of the battery positive electrode material as described above, a sulfide solid-state electrolyte, a conductive agent, and an adhesive agent, where a mass proportion of the battery positive electrode material is 90%~95%, a mass proportion of the sulfide solid-state electrolyte is 2.5%~4%, a mass proportion of the conductive agent is 1.5%~4%, and a mass proportion of the adhesive agent is 0.5%~1%.

**In** an embodiment, the conductive agent may include at least one of a carbon material, a metal particle, or a conductive polymer. Preferably, the conductive agent is a carbon material. The adhesive agent may be selected from polytetrafluoroethylene (PTFE) or polyvinylidene fluoride.

In an embodiment, the manufactured battery positive electrode material, the sulfide solid-state electrolyte, the conductive agent, and the adhesive agent are mixed and compressed, to obtain a battery positive electrode with a high surface density.

In another aspect, the present application provides an all-solid-state battery, including the battery positive electrode as described above.

In an embodiment, the all-solid-state battery further includes a battery negative electrode, and a solid electrolyte membrane disposed between the battery negative electrode and the battery positive electrode.

**In** an embodiment, the battery negative electrode includes lithium, lithium/indium alloy, graphite, silicon, silicon alloy, silica, and a mixture of silica/graphite, or a mixture of silica/graphite/silicon.

### DETAILED DESCRIPTION OF THE EMBODIMENTS

To further understand the present application, the manufacturing method of the battery positive electrode material, the battery positive electrode, and the all-solid-state battery provided in the present application will be described in detail below with reference to the embodiments, and the protection scope of the present application is not limited to the following embodiments.

In recent years, research on the solid-state lithium-ion battery is highly favored. Electrolyte of the solid-state lithium-ion battery is present in an electrode in the form of solid (solid-state electrolyte), and has advantages of non-volatility, non-combustion and rapid ion conduction. Moreover, the solid-state lithium-ion battery can adapt to higher-capacity positive and negative electrode materials, and its energy density can reach 500 Wh/kg. However, contact performance between the solid-state electrolyte and the positive electrode active material in the solid-state lithium-ion battery is poor, and therefore it is required to set a larger amount proportion of solid-state electrolyte in manufacturing the positive electrode of the solid-state lithium-ion battery, so as to realize effective contact between the solid-state electrolyte and the active material. However, this will undoubtedly greatly reduce the energy density of the solid-state lithium-ion battery.

To solve these problems, a particle size of the solid-state electrolyte will be reduced, for example, the particle size of the solid-state electrolyte may be reduced to about 1 micron, and the amount proportion of the solid-state electrolyte in the positive electrode may be reduced to 20%~15%. However, at present, a toxic solvent is usually used to mechanically crush the solid-state electrolyte, which not only increases manufacturing procedures of the solid-state lithium-ion battery, but also causes pollution to environment. Therefore, a manufacturing method of a positive electrode of a solid-state lithium-ion battery with a high surface density is developed to improve a loading capacity of a positive electrode active material, which is a key to manufacture a solid-state lithium-ion battery with a high energy density.

The embodiments of the present application provide a manufacturing method of a battery positive electrode material, including: forming a solution by dissolving a sulfide solid-state electrolyte in an organic solvent; dispersing a positive electrode active material into the solution; and by drying the solution, obtaining a battery positive electrode material in which the positive electrode active material is coated with the sulfide solid-state electrolyte.

**For** the solid-state battery, a difficult problem currently faced is poor contact performance between particles (that is, poor solid-solid contact), which, on one hand, will increase an internal resistance of the solid-state battery, and decrease a deintercalation and intercalation rate of positive electrode lithium ions, thereby affecting capacity utilization, rate performance, and cycle performance of the positive electrode active material. To solve this problem, a larger amount of sulfide solid-state electrolyte is usually used to build effective ion transport channels. However, with the increase of the amount of the sulfide solid-state electrolyte, an amount of the positive electrode active material will be decreased, and therefore an output capacity and an energy density of the solid-state battery are correspondingly reduced.

In the above solution of the present application, a sulfide solid-state electrolyte layer is constructed on a surface of the positive electrode active material through a wet method, which can increase the contact area between the solid-state electrolyte and the positive electrode active material, effectively solves the problem of small interfacial contact area between conventional solid-state electrolyte and positive electrode active material. Thus, the capability of ions to rapidly intercalate into or deintercalate out of the positive electrode active material is enhanced, and the transport of ions and utilization of capacity are facilitated. In addition, the formed sulfide solid-state electrolyte layer can reduce a volume expansion degree of the positive electrode material due to repeated deintercalation and intercalation of ions to a certain extent, and try to avoid the problem of contact failure due to repeated expansion of the positive electrode material. The manufacturing method of the battery positive electrode material is simple and efficient, and its manufacturing cost is low.

In some embodiments, the organic solvent includes at least one of ethanol, acetonitrile, N-methylformamide, or tetrahydrofuran. Preferably, the organic solvent includes ethanol.

**In** some embodiments, before forming the solution by dissolving the sulfide solid-state electrolyte in the organic solvent, the method further includes an organic solvent pretreatment step: obtaining an anhydrous organic solvent by adding a drying agent to the organic solvent and then standing the organic solvent. Therefore, the hydrolysis of the sulfide solid-state electrolyte can be avoided as much as possible.

In some embodiments, the drying agent includes a molecular sieve, and of course, selection of the drying agent is not limited thereto.

In some embodiments, a moisture content of the anhydrous organic solvent is less than 50 ppm. Therefore, it can be ensured that the moisture content of the organic solvent is as low as possible, and the hydrolysis reaction after the sulfide solid-state electrolyte is dissolved in water can be avoided as much as possible.

**In** some embodiments, an amount ratio of the sulfide solid-state electrolyte, the organic solvent, and the positive electrode active material is 0.002~0.03 g: 5~10 mL: 1 g. Therefore, it is implemented that a solid-state electrolyte layer with a nanometer thickness is constructed on the surface of the positive electrode active material. Preferably, the amount ratio of the sulfide solid-state electrolyte, the organic solvent, and the positive electrode active material is 0.002~0.01 g: 5~10 mL: 1 g.

In some embodiments, a thickness of a coating layer formed by coating the positive electrode active material with the sulfide solid-state electrolyte is 1~10 nm. Therefore, it can be avoided that the coating layer is easily broken during charging and discharging due to the thickness of the coating layer being too small, and it is also avoided that transport of electrons is suppressed due to the thickness of the coating layer being too large.

In some embodiments, the sulfide solid-state electrolyte includes at least one of Li₇₋ₐPS₆₋ₐXₐ, Thio-LISICONs, or Li₁₁₋ₓM₂₋ₓP₁₊ₓS₁₂, where X is selected from at least one of chlorine, bromine, or iodine; 0.5≤a≤2; M is selected from at least one of Ge, Sn, or Si.

In some embodiments, before dispersing the positive electrode active material into the solution, the method further includes: carrying out vacuum drying on the positive electrode active material, where a treatment temperature of the vacuum drying is 80~120 °C, and a treatment time of the vacuum drying is 5~10 h. Therefore, the positive electrode active material can be avoided from being doped with moisture, and after the positive electrode active material is dispersed into the solution, the sulfide solid-state electrolyte can be easily hydrolyzed.

Preferably, the treatment time of the vacuum drying is 8~10 h.

In some embodiments, a vacuum degree of the vacuum drying is -0.085~-0.1 MPa. Therefore, it can be avoided that drying efficiency is influenced due to the vacuum degree being too low, and it is also avoided that a placement state of the positive electrode active material is influenced due to the vacuum degree being too high.

In some embodiments, the positive electrode active material is dispersed into the solution and then the solution is continuously stirred, to make the positive electrode active material uniformly dispersed. It should be noted that specific stirring manner(s) may be magnetic stirring and/or mechanical stirring, but is/are not limited thereto.

In some embodiments, an average particle size of the sulfide solid-state electrolyte is 100 nm≤ D50≤30 µm; an average particle size of the positive electrode active material is 10 nm≤ D50≤20 µm.

Preferably, the average particle size of the sulfide solid-state electrolyte is 1 µm≤ D50≤5 µm; the average particle size of the positive electrode active material is 1 µm≤ D50≤8 µm.

In some embodiments, the positive electrode active material includes LiNiₓCo_{y}Mn_{(1-x-y)}O₂.

In some embodiments, a shape of the positive electrode active material includes a particle shape, a rod shape, and a sheet shape; preferably, a shape of the positive electrode material is a particle shape.

**In** some embodiments, the positive electrode active material is formed by coating LiNiₓCo_{y}Mn_{(1-x-y)}O₂ with a lithium-containing compound coating layer. The lithium-containing compound coating layer includes at least one of lithium niobate, lithium tantalate, lithium zirconate, lithium germanate, lithium phosphate, lithium iron phosphate, lithium aluminum titanium phosphate (LATP), lithium lanthanum zirconium oxide (LLZO), lithium silicate, lithium carbonate, lithium oxide, or lithium aluminum oxide. Therefore, the lithium-containing compound coating layer can greatly reduce occurrence of side reactions of active substances and the sulfide solid-state electrolyte in the positive electrode active material.

Preferably, the lithium-containing compound coating layer includes at least one of lithium niobate or lithium phosphate.

For further understanding, examples are listed below to describe the manufacturing method of the battery positive electrode material provided in the present application in detail, and the protection scope of the present application is not limited to the following examples.

### Example 1

S1: A positive electrode active material LiNi_{0.8}Co_{0.}1Mn_{0.1}O₂ coated with LiNbO₃ (LNO@NCM811) is subjected to vacuum drying at 120 °C, a vacuum degree is controlled to be about -0.1 MPa, and a drying time is 5 h; after ethanol is dewatered through a molecular sieve, moisture testing is carried out, and a moisture value of the dewatered ethanol is 50 ppm;

S2: 0.02g of sulfide solid-state electrolyte Li₆PS₅Cl is dissolved in 20 mL of organic solvent ethanol, the solvent is sufficiently shaked, and after the sulfide solid-state electrolyte is completely dissolved, a solution is formed; 10g of dried LNO@NCM811 is dispersed into the solution, the solution is magnetically stirred, a stirring rate is 500 rpm/min, and a stirring time is 30 min. Then, the above solution is dried in a vacuum oven, a vacuum degree is set to be -0.1 MPa, a drying temperature is 90 °C, and a drying time is 8 h, so that a battery positive electrode material in which the positive electrode active material LNO@NCM811 is coated with the sulfide solid-state electrolyte Li₆PS₅Cl is manufactured, and the battery positive electrode material is numbered as NCM-1.

### Example 2

Example 2 differs from Example 1 in that the sulfide solid-state electrolyte is Li₁₀GeP₂S₁₂, and other manufacturing methods and conditions are the same as those in Example 1.

A battery positive electrode material in which the positive electrode active material LNO@NCM811 is coated with the sulfide solid-state electrolyte Li₁₀GeP₂S₁₂ is obtained, and the battery positive electrode material is numbered as NCM-2.

### Example 3

Example 3 differs from Example 1 in that the sulfide solid-state electrolyte is Li_{3.833}Sn_{0.833}As_{0.166}S₄, and other manufacturing methods and conditions are the same as those in Example 1.

A battery positive electrode material in which the positive electrode active material LNO@NCM811 is coated with the sulfide solid-state electrolyte Li_{3.833}Sn_{0.833}As_{0.166}S₄ is obtained, and the battery positive electrode material is numbered as NCM-3.

### Example 4

Example 4 differs from Example 1 in that the positive electrode active material is LiNi_{0.8}Co_{0.1}Mn_{0.1}O₂ coated with Li₃PO₄ (LPO@NCM811), and other manufacturing methods and conditions are the same as those in Example 1.

A battery positive electrode material in which the positive electrode active material LPO@NCM811 is coated with the sulfide solid-state electrolyte Li₆PS₅Cl is obtained, and the battery positive electrode material is numbered as NCM-4.

### Example 5

Example 5 differs from Example 1 in that the amount of the sulfide solid-state electrolyte Li₆PS₅Cl is 0.1g, and other manufacturing methods and conditions are the same as those in Example 1.

A battery positive electrode material in which the positive electrode active material LNO@NCM811 is coated with the sulfide solid-state electrolyte Li₆PS₅Cl is manufactured, and the battery positive electrode material is numbered as NCM-5.

### Example 6

Example 6 differs from Example 1 in that the sulfide solid-state electrolyte is Li₆PS₅Br, and the organic solvent is N-methylformamide, and other manufacturing methods and conditions are the same as those in Example 1.

A battery positive electrode material in which the positive electrode active material LNO@NCM811 is coated with the sulfide solid-state electrolyte Li₆PS₅Br is manufactured, and the battery positive electrode material is numbered as NCM-6.

### Example 7

Example 7 differs from Example 1 in that the sulfide solid-state electrolyte is Li₆PS₅I, and other manufacturing methods and conditions are the same as those in Example 1.

A battery positive electrode material in which the positive electrode active material LNO@NCM811 is coated with the sulfide solid-state electrolyte Li₆PS₅I is manufactured, and the battery positive electrode material is numbered as NCM-7.

### Example 8

Example 8 differs from Example 1 in that the amount of the sulfide solid-state electrolyte Li₆PS₅Cl is 0.05 g, and the organic solvent is acetonitrile, and other manufacturing methods and conditions are the same as those in Example 1.

A battery positive electrode material in which the positive electrode active material LNO@NCM811 is coated with the sulfide solid-state electrolyte Li₆PS₅Cl is manufactured, and the battery positive electrode material is numbered as NCM-8.

### Example 9

Example 9 differs from Example 1 in that the positive electrode active material is LiNi_{0.6}Co_{0.2}Mn_{0.2}O₂ coated with LiNbO₃, and other manufacturing methods and conditions are the same as those in Example 1; a manufactured battery positive electrode material is numbered as NCM-9.

### Example 10

Example 10 differs from Example 1 in that the positive electrode active material is LiNi_{0.8}Co_{0.1}Mn_{0.1}O₂, and other manufacturing methods and conditions are the same as those in Example 1; a manufactured battery positive electrode material is numbered as NCM-10.

### Example 11

Example 11 differs from Example 1 in that the positive electrode active material is LiNi_{0.6}Co_{0.2}Mn_{0.2}O₂, and other manufacturing methods and conditions are the same as those in Example 1; a manufactured battery positive electrode material is numbered as NCM-11.

### Comparative Example 1

Comparative Example 1 differs from Example 1 in that, in this comparative example, a battery positive electrode material is composed of the positive electrode active material LNO@NCM811, and is numbered as NCM-A.

### Comparative Example 2

Comparative Example 2 differs from Example 1 in that, in this comparative example, a battery positive electrode material is composed of the positive electrode active material LPO@NCM811, and is numbered as NCM-B.

### Comparative Example 3

Comparative Example 3 differs from Example 1 in that, in this comparative example, a battery positive electrode material is composed of a positive electrode active material LNO@NCM622 (LiNi_{0.6}Co_{0.2}Mn_{0.2}O₂ coated with LiNbO₃), and is numbered as NCM-C.

The embodiments of the present application further provide a battery positive electrode, including a battery positive electrode material manufactured by the manufacturing method of the battery positive electrode material according to any one of examples of the present application, a sulfide solid-state electrolyte, a conductive agent, and an adhesive agent, where a mass proportion of the battery positive electrode material is 90%~95%, a mass proportion of the sulfide solid-state electrolyte is 2.5%~4%, a mass proportion of the conductive agent is 1.5%~4%, and a mass proportion of the adhesive agent is 0.5%~1%. Therefore, a loading capacity of the positive electrode active material can be improved, and capacity utilization performance is greatly increased.

In the above solution, the sulfide solid-state electrolyte can be first in contact with the battery positive electrode material to promote migration of lithium ions, so as to further improve conductivity of ions.

In some embodiments, the conductive agent may include at least one of a carbon material, a metal particle, or a conductive polymer. Therefore, conductivity of electrons in the battery positive electrode can be improved. Preferably, the conductive agent is a carbon material. The adhesive agent may be selected from polytetrafluoroethylene (PTFE) or polyvinylidene fluoride.

In some embodiments, the manufactured battery positive electrode material, the sulfide solid-state electrolyte, the conductive agent, and the adhesive agent are mixed and compressed, to obtain a battery positive electrode with a high surface density.

The embodiments of the present application further provide an all-solid-state battery, including the battery positive electrode according to any one of examples of the present application.

The all-solid-state battery manufactured by the battery positive electrode provided in the present application has excellent cycle performance and rate performance.

In some embodiments, the all-solid-state battery further includes a battery negative electrode, and a solid electrolyte membrane disposed between the battery negative electrode and the battery positive electrode.

In some embodiments, the battery negative electrode includes lithium, lithium/indium alloy, graphite, silicon, silicon alloy, silica, and a mixture of silica/graphite, or a mixture of silica/graphite/silicon.

For further understanding, examples are listed below to describe the battery positive electrode and the all-solid-state battery provided in the present application in detail, and the protection scope of the present application is not limited to the following examples.

### Experimental Example 1

### S1: Manufacturing of positive electrode plate

9g of battery positive electrode material NCM-1 powder, 0.5g of sulfide solid-state electrolyte Li₆PS₅Cl, and 0.4g of carbon material (for example, VGCF (Vapor Grown Carbon Fiber)) are added into a stirrer and stirred for 10 min in a pulsed manner at a low speed (300 rpm) to be mixed uniformly, then 0.1g of adhesive agent (for example, PTFE) is added thereto and stirred for 10 min in a pulsed manner at a low speed (300 rpm) to be stirred uniformly. Next, a fibering process is carried out by stirring for 10 min in a pulsed manner at a high speed (20000 rpm), and a mass proportion of the battery positive electrode material is 90%. The mixed powder is put into a roller press machine and rolled at a temperature of 150 °C to form a membrane, and finally, the membrane is combined with a current collector aluminum foil by hot rolling to obtain a positive electrode plate.

### S2: Manufacturing of negative electrode plate: lithium indium alloy plate

For a specific manufacturing method of the lithium indium alloy plate, reference may be made to the related art, which will not be repeated here.

### S3: Manufacturing of solid-state electrolyte membrane

4.95g of sulfide solid-state electrolyte Li₆PS₅Cl and 0.05g of PTFE are added into a stirrer and stirred for 10 min in a pulsed manner at a low speed (300 rpm) to be mixed uniformly. Then, a fibering process is carried out by stirring in a pulsed manner at a high speed (20000 rpm). The mixed powder is put into a roller press machine and rolled at a temperature of 150 °C to form a solid-state electrolyte membrane.

S4: The positive electrode plate, the solid-state electrolyte membrane, and the negative electrode plate are assembled in a stacking manner at an applied pressure of 5 MPa to form a solid-state battery.

Battery test: Charging and discharging tests are carried out on the solid-state battery for 100 cycles at a constant current of 0.1 C (1C=180 mAh/g) at 25 °C, and the solid-state battery is tested by using a two-probe method to obtain a battery impedance. Test results are shown in Table 1.

### Experimental Example 2

Experimental Example 2 differs from Experimental Example 1 in that the battery positive electrode material is NCM-2 and an amount thereof is 9.5 g, an amount of the sulfide solid-state electrolyte Li₆PS₅Cl is 0.25 g, an amount of VGCF is 0.15 g, an amount of the adhesive agent PTFE is 0.1 g, and a mass proportion of the battery positive electrode material is 95%. Other manufacturing methods and conditions are the same as those in Experimental Example 1.

### Experimental Example 3

Experimental Example 3 differs from Experimental Example 1 in that the battery positive electrode material is NCM-3 and an amount thereof is 9.2 g, an amount of the sulfide solid-state electrolyte Li₆PS₅Cl is 0.4 g, an amount of VGCF is 0.3 g, an amount of the adhesive agent PTFE is 0.1 g, and a mass proportion of the battery positive electrode material is 92%. Other manufacturing methods and conditions are the same as those in Experimental Example 1.

### Experimental Examples 4~16

Differences from Experimental Example 1 are that the battery positive electrode materials used in Experimental Examples 4~16 are NCM-4, NCM-5, NCM-6, NCM-7, NCM-8, NCM-9, NCM-10, NCM-11, NCM-A, NCM-B, NCM-C, NCM-A, and NCM-A in sequence respectively, where, in Experimental Example 15, an amount of NCM-A is 7 g, and an amount of the sulfide solid-state electrolyte Li₆PS₅Cl is 2.5 g; in Experimental Example 16, an amount of NCM-A is 8 g, and an amount of the sulfide solid-state electrolyte Li₆PS₅Cl is 1.5 g. Other manufacturing methods and conditions in Experimental Examples 4~16 are the same as those in Experimental Example 1.

**Table 1 Test results of solid-state batteries manufactured in Experimental Examples 1~16**

| Experimental Example | Mass proportion of battery positive electrode material | Battery impedance (Ω) | First discharge specific capacity (mAh/g) | First efficiency (%) | Capacity retention rate for 100 cycles (%) |
|---|---|---|---|---|---|
| Experimental Example 1 | 90% | 41 | 195 | 87.5 | 95.4 |
| Experimental Example 2 | 95% | 45 | 190 | 86.8 | 89 |
| Experimental Example 3 | 92% | 42.5 | 185 | 83.5 | 85 |
| Experimental Example 4 | 90% | 44 | 191 | 87 | 93.3 |
| Experimental Example 5 | 90% | 42 | 189 | 86.5 | 90.2 |
| Experimental Example 6 | 90% | 46 | 186 | 84 | 87.3 |
| Experimental Example 7 | 90% | 48 | 184 | 83.3 | 85.9 |
| Experimental Example 8 | 90% | 44 | 193 | 86 | 94 |
| Experimental Example 9 | 90% | 43 | 168 | 87.7 | 94.5 |
| Experimental Example 10 | 90% | 49 | 167 | 70.3 | 40.5 |
| Experimental Example 11 | 90% | 53 | 145 | 70.1 | 43.3 |
| Experimental Example 12 | 90% | 58 | 152 | 71.1 | 50.3 |
| Experimental Example 13 | 90% | 61 | 150 | 70.6 | 49.9 |
| Experimental Example 14 | 90% | 57 | 134 | 72.9 | 65.7 |
| Experimental Example 15 | 70% | 41.5 | 185 | 82.3 | 87.2 |
| Experimental Example 16 | 80% | 42 | 171 | 76.6 | 73.3 |

**By** comparing Experimental Examples 1~11 with Experimental Examples 12~14 in Table 1, it can be seen that the solid-state battery manufactured by the battery positive electrode material in which the positive electrode active material is coated with the sulfide solid-state electrolyte can reduce the battery impedance, and improve the first discharge specific capacity, the first efficiency, and the capacity retention rate. This is because, according to the present application, by coating the positive electrode active material with the sulfide solid-state electrolyte, an excellent ion conducting network can be constructed on the surface of the positive electrode active material, an effective contact area between the positive electrode active material and the sulfide solid-state electrolyte is increased, and a deintercalation and intercalation rate of lithium ions is greatly improved. Therefore, when the battery positive electrode is manufactured, an excessive amount of sulfide electrolyte does not need to be added, ensuring that the solid-state battery can have a higher load of battery positive electrode material and manufacture a high-load battery positive electrode. By comparing Experimental Examples 12~14 with Experimental Examples 15~16, it can be seen that, in a case where the positive electrode active material is not coated with the sulfide solid-state electrolyte, the amount of the positive electrode active material needs to be appropriately reduced, and the amount of the sulfide solid-state electrolyte Li₆PS₅Cl needs to be appropriately increased, so that the battery impedance can be reduced, and the first discharge specific capacity, the first efficiency, and the capacity retention rate are improved.

The technical solutions provided in the present application can achieve the following beneficial effects: the present application provides a manufacturing method of a battery positive electrode material, a battery positive electrode, and an all-solid-state battery. The manufacturing method can increase the contact area between the solid-state electrolyte and the positive electrode active material, effectively solves the problem of small interfacial contact area between conventional solid-state electrolyte and positive electrode active material. Thus, the capability of ions to rapidly intercalate into or deintercalate out of the positive electrode active material is enhanced, and the transport of ions and utilization of capacity are facilitated.

The above are only preferred embodiments of the present application, which are not intended to limit the present application. Any modification, equivalent substitution, improvement, etc. made within the spirit and principle of the present application should be included within the protection scope of this application.

## Claims

1. A manufacturing method of a battery positive electrode material, comprising:
forming a solution by dissolving a sulfide solid-state electrolyte in an organic solvent;
dispersing a positive electrode active material into the solution; and
by drying the solution, obtaining a battery positive electrode material in which the positive electrode active material is coated with the sulfide solid-state electrolyte.

2. The manufacturing method of the battery positive electrode material according to claim 1, wherein the organic solvent comprises at least one of ethanol, acetonitrile, N-methylformamide, or tetrahydrofuran.

3. The manufacturing method of the battery positive electrode material according to claim 2, wherein the sulfide solid-state electrolyte comprises at least one of Li₇₋ₐPS₆₋ₐXₐ, Thio-LISICONs, or Li₁₁₋ₓM₂₋ₓP₁₊ₓS₁₂,
wherein X is selected from at least one of chlorine, bromine, or iodine; 0.5≤a≤2; M is selected from at least one of Ge, Sn, or Si.

4. The manufacturing method of the battery positive electrode material according to claim 1, wherein
the positive electrode active material comprises LiNiₓCo_{y}Mn_{(1-x-y)}O₂.

5. The manufacturing method of the battery positive electrode material according to claim 1, wherein the positive electrode active material is formed by coating LiNiₓCo_{y}Mn_{(1-x-y)}O₂ with a lithium-containing compound coating layer;
the lithium-containing compound coating layer comprises at least one of lithium niobate, lithium tantalate, lithium zirconate, lithium germanate, lithium phosphate, lithium iron phosphate, lithium aluminum titanium phosphate (LATP), lithium lanthanum zirconium oxide (LLZO), lithium silicate, lithium carbonate, lithium oxide, or lithium aluminum oxide.

6. The manufacturing method of the battery positive electrode material according to claim 1, wherein an amount ratio of the sulfide solid-state electrolyte, the organic solvent, and the positive electrode active material is 0.002~0.03 g: 5~10 mL: 1 g.

7. The manufacturing method of the battery positive electrode material according to claim 6, wherein the amount ratio of the sulfide solid-state electrolyte, the organic solvent, and the positive electrode active material is 0.002~0.01 g: 5~10 mL: 1 g.

8. The manufacturing method of the battery positive electrode material according to claim 6, wherein a thickness of a coating layer formed by coating the positive electrode active material with the sulfide solid-state electrolyte is 1~10 nm.

9. The manufacturing method of the battery positive electrode material according to any one of claims 1 to 8, wherein, before forming the solution by dissolving the sulfide solid-state electrolyte in the organic solvent, the method further comprises:
obtaining an anhydrous organic solvent by adding a drying agent to the organic solvent and then standing.

10. The manufacturing method of the battery positive electrode material according to any one of claims 1 to 8, wherein, before dispersing the positive electrode active material into the solution, the method further comprises:
carrying out vacuum drying on the positive electrode active material, wherein a treatment temperature of the vacuum drying is 80~120 °C, and a treatment time of the vacuum drying is 5~10 h.

11. The manufacturing method of the battery positive electrode material according to claim 10, wherein a vacuum degree of the vacuum drying is -0.085~-0.1 MPa.

12. The manufacturing method of the battery positive electrode material according to any one of claims 1 to 8, wherein an average particle size of the sulfide solid-state electrolyte is 100 nm≤ D50≤30 µm;
an average particle size of the positive electrode active material is 10 nm≤ D50≤20 µm.

13. The manufacturing method of the battery positive electrode material according to claim 12, wherein the average particle size of the sulfide solid-state electrolyte is 1 µm≤ D50≤5 µm;
the average particle size of the positive electrode active material is 1 µm≤ D50≤8 µm.

14. The manufacturing method of the battery positive electrode material according to claim 9, wherein the drying agent comprises a molecular sieve.

15. The manufacturing method of the battery positive electrode material according to claim 9, wherein a moisture content of the anhydrous organic solvent is less than 50 ppm.

16. The manufacturing method of the battery positive electrode material according to claim 1, wherein a shape of the positive electrode active material comprises a particle shape, a rod shape, and a sheet shape.

17. A battery positive electrode, comprising a battery positive electrode material manufactured by the manufacturing method of a battery positive electrode material according to any one of claims 1 to 16, a sulfide solid-state electrolyte, a conductive agent, and an adhesive agent,
wherein a mass proportion of the battery positive electrode material is 90%~95%, a mass proportion of the sulfide solid-state electrolyte is 2.5%~4%, a mass proportion of the conductive agent is 1.5%~4%, and a mass proportion of the adhesive agent is 0.5%~1%.

18. The battery positive electrode according to claim 17, wherein the conductive agent comprises at least one of a carbon material, a metal particle, or a conductive polymer.

19. The battery positive electrode according to claim 17, wherein the adhesive agent is selected from polytetrafluoroethylene (PTFE) or polyvinylidene fluoride.

20. An all-solid-state battery, comprising the battery positive electrode according to claim 17.
